# EUROPÄISCHE PATENTSCHRIFT

(11) **EP 3 705 251 B1**
(45) Veröffentlichungstag und Bekanntmachung des Hinweises auf die Patenterteilung: **03.05.2023**
(21) Anmeldenummer: 19161304.1
(22) Anmeldetag: 07.03.2019
(51) Int. Cl.: B29B 15/12

(54) **IMPRÄGNIERANLAGE UND VERFAHREN ZUM IMPRÄGNIEREN EINES TEXTILEN FLÄCHENGEBILDES FÜR KOMPOSITBAUTEILE**
IMPREGNATION PLANT AND METHOD FOR IMPREGNATING A TEXTILE SHEET MATERIAL FOR COMPOSITE COMPONENTS
INSTALLATION D'IMPRÉGNATION ET PROCÉDÉ D'IMPRÉGNATION D'UNE STRUCTURE PLANE TEXTILE POUR COMPOSANTS COMPOSITES

(43) Veröffentlichungstag der Anmeldung: 09.09.2020
(73) Patentinhaber: KARL MAYER Technische Textilien GmbH, 09117 Chemnitz (DE)
(72) Erfinder: TRÖLTZSCH, Jürgen, 09112 Chemnitz (DE); GLÖCKNER, René, 09599 Freiberg (DE)
(74) Vertreter: Leske, Thomas

(56) Entgegenhaltungen:
- DE-A1- 2 856 506
- DE-A1-102009 046 670
- JP-A- H05 228 933
- MILLER A ET AL: "IMPREGNATION TECHNIQUES FOR THERMOPLASTIC MATRIX COMPOSITES", POLYMERS AND POLYMER COMPOSITES, RAPRA TECHNOLOGY, GB, vol. 4, no. 7, 1 January 1996 (1996-01-01) , pages 459-481, XP000658227, ISSN: 0967-3911

## Beschreibung

Die Erfindung betrifft eine Imprägnieranlage und ein Verfahren zum Imprägnieren eines textilen Flächengebildes für Kompositbauteile.

Das Verfahren zum Imprägnieren eines textilen Flächengebildes für Kompositbauteile wird mittels einer Imprägnieranlage realisiert. Beim Imprägnieren von textilen Flächengebilden werden Doppelbandpressen, Kalandersysteme oder Kaschieranlagen eingesetzt, bei welchen die zu imprägnierenden Materialien über Rollensysteme mit Druckbeaufschlagung bzw. durch Einstellung eines definierten Spaltes zwischen den Rollensystemen kontinuierlich miteinander verbunden oder eben auch imprägniert werden. Dadurch, dass die Rollen in der Regel senkrecht übereinander angeordnet sind, wird bei entsprechender Druckbeaufschlagung des zu imprägnierenden Materials eine Linienpressung durch die jeweiligen Rollen ausgeübt. Nachteilig dabei ist, dass bei hohen Produktionsgeschwindigkeiten dies zu einer schlagartigen oder kurzzeitigen, unter Umständen auch relativ hohen Druckbeaufschlagung führt. Um diesen Effekt etwas abzumildern, sind steife Stahlbänder mit hoher Zugkraftausspannung verwendet worden, um auch zwischen den Rollensystemen eine gewisse Druckkraft in Dickenrichtung des zu imprägnierenden und durch die entsprechende Anlage geförderten Materials zu erhalten. Es ist üblich, dass mehrere Rollenpaare in kurzen Abständen hintereinander angeordnet sind. Bei diesen bekannten Rollenanordnungen wird eben hauptsächlich dann auf das zu verbindende Material Druck ausgeübt, wenn die Linienpressung zwischen einander gegenüberliegenden Rollen erfolgt. Dazwischen erfolgt eine weitgehende Druckentlastung.

Beim Imprägnieren werden in der Regel Materialsysteme miteinander verbunden, bei denen ein kontinuierliches Fließen eines der Materialien notwendig ist, dies ist in der Regel das Imprägniermittel, bei Kompositmaterialien auch Matrix genannt. Soll das Imprägniermittel gleichmäßig verteilt werden, muss auch eine kontinuierlich wirkende Druckbeaufschlagung realisiert werden. Insbesondere bei textilen Flächengebilden aus Verstärkungsfasern wie Glasfasern, Kohlenstofffasern oder Aramidfasern, welche mit der Matrix imprägniert werden sollen, ist dies erforderlich.

In US 2016/0271860 A1 ist ein Verfahren zum Herstellen eines schichtartigen faserverstärkten Kunststoffes als Kompositwerkstoff beschrieben, bei welchem eine thermoplastische Matrix und eine Verstärkungsfaserschicht miteinander verbunden werden. Dabei werden Bandsysteme im Sinne von Endlosbändern übereinander angeordnet, zwischen denen sich bei veränderndem Abstand voneinander gegenüberliegenden Walzen das zu verbindende bzw. das zu imprägnierende Material entsprechend gepresst wird. Trotz einer relativ großen Anzahl von relativ eng nebeneinander und hintereinander angeordneten Walzenpaaren bleibt das Problem ungelöst, dass die gegenüberliegenden Walzen einen Linienkontakt auf das zu imprägnierende Material ausüben, zwischen den Walzenpaaren jedoch das zu verbindende Material drucklos oder mit zumindest sehr niedrigem Druck gegenüber dem durch die Walzen unmittelbar ausgeübten Druck vorhanden ist. Bei dieser bekannten Anlage handelt es sich um eine Doppelbandpresse.

Aus DE 600 03 766 T2 sind ein Verfahren und eine Vorrichtung zur Herstellung eines Verbundbandes bekannt, welches aus Verstärkungsfasern und einem thermoplastischen Material gebildet ist. Dabei sind drei Walzen jeweils mit einem Spalt zueinander angeordnet, wobei der Abstand derartig ist, dass eine obere Walze in den Zwischenraum zwischen den beiden unteren Walzen eintaucht. Ein zu imprägnierendes Materialband wird nun durch das Walzensystem hindurchgefördert, wobei durch das Ausüben von Druck ein Verbundband imprägniert wird. Diese Verbundbänder werden nach erfolgter Imprägnierung auch als sogenannte Prepregs bezeichnet. Um unterschiedliche Dickenverhältnisse für unterschiedliche Anforderungen des zu imprägnierenden Materials realisieren zu können, ist bei diesem bekannten System die obere einzelne Walze in Richtung auf das zu imprägnierende Material, d. h. senkrecht zu den Walzen höhenregelbar. Umlaufende Bänder wie bei Doppelbandpressen sind nicht beschrieben.

In EP 0 013 548 B1 ist eine Vorrichtung zum Entwässern von wasserhaltigen Stoffen beschrieben. Dabei wird vorzugsweise Schlamm zwischen zwei Siebbändern über mehrere hintereinander geschaltete Umlenkrollen geführt. Die Bandspannung wird über eine Presswalzenverstellung einstellbar realisiert. Eine Reihe von Druckrollen ist vorgesehen, welche die Siebbänder gegen die Presswalzen andrücken. Beide Siebbänder werden in geschlossenem Kreislauf abwechselnd über den oberen Bereich und anschließend über den unteren Bereich nebeneinanderliegender Walzen geführt. Damit sind unabhängige Bandsysteme, zwischen denen das zu behandelnde Material geführt ist, nicht beschrieben.

DE 10 2009 046 670 A1 beschreibt eine Anlage zur Herstellung von faserverstärkten Formteilen und ein Verfahren zum Betreiben einer derartigen Anlage. Mittels dieser bekannten Anlage werden faserverstärkte Harzmatten für faserverstärkte Formteile mittels Vliespressen in einer Formpresse kontinuierlich hergestellt. In einer Mischvorrichtung wird mindestens ein Harzansatz mit geschnittenen Glasfasern zunächst zusammengeführt, und in einer Walk- und Tränkvorrichtung werden die Fasern mit dem Harzansatz zu einer Harzmatte vermischt. Die Anlage umfasst des Weiteren eine Eindickvorrichtung, mittels welcher die Harzmatte einem Reifungsprozess unterzogen wird. Und schließlich ist zum Zuschneiden der Harzmatte auf vorgegebene Zuschnittlängen eine Ablängeinrichtung vorgesehen. Zum Walken der Harzmatte zum Verteilen der geschnittenen Glasfasern innerhalb des Harzansatzes wird diese durch eine Einrichtung geführt, welche ein oberes und ein unteres Endlosband aufweist, wobei zwischen Umlenkrollen im Inneren der Endlosbänder mehrere Walzen angeordnet sind, welche jedoch nicht verstellbar sind. Die Umschlingungslänge der Harzmatte um diese Walzen wird dabei konstant gehalten. Nach den gegenüberliegenden beiden Endlosbändern wird die Harzmatte durch eine Walzenanordnung geführt, welche eine Art Fadenreserve darstellt und welche dafür vorgesehen ist, dass eine definierte Spannung in den jeweiligen Endlosbändern eingestellt oder aufrechterhalten werden kann. Die Umlenkwalzen innerhalb der Endlosbänder sind jedoch fest angeordnet, und deren Umschlingungswinkel wird nicht verändert. Die Walzenanordnung ist dafür vorgesehen, dass die einzelnen, teilweise auch kleinen Faserstückchen der geschnittenen Glasfasern möglichst gleichmäßig innerhalb der Harzmatte verteilt werden.

Demgegenüber besteht die Aufgabe der Erfindung darin, ein Verfahren und eine Imprägnieranlage zur Realisierung des Verfahrens zum Imprägnieren eines textilen Flächengebildes für Kompositbauteile zu schaffen, bei welchem das Imprägniermittel, welches mit einem textilen Flächengebilde zu verbinden ist, während des Förderns durch die Imprägnieranlage möglichst gleichmäßig mit Druck belastet wird, damit das Imprägniermittel gleichmäßig und gut verteilt in das textile Flächengebilde eindringen kann, um so ein sogenanntes Prepreg guter Qualität zu schaffen.

Diese Aufgabe wird mit einer Imprägnieranlage mit den Merkmalen gemäß Anspruch 1 und mit einem Verfahren mit den Merkmalen gemäß Anspruch 9 gelöst. Zweckmäßige Weiterbildungen sind in den jeweiligen abhängigen Ansprüchen definiert.

Gemäß einem ersten Aspekt der Erfindung ist mittels der erfindungsgemäßen Imprägnieranlage ein textiles Flächengebilde für Kompositbauteile imprägnierbar, wobei eine Matrix derart auf das textile Flächengebilde in Form einer Fasern aufweisenden unidirektionalen Lage, eines Multiaxialgeleges, eines Vlieses oder eines Gewebes aufbringbar ist, dass dieses zumindest teilweise und/oder zumindest einseitig von der Matrix durchdrungen ist. Die Matrix ist eine fließfähige Materialschicht, welche das in der Regel poröse textile Flächengebilde nach dem Zusammenführen der Matrix mit dem textilen Flächengebilde durchdringt. Dabei kann die Matrix das textile Flächengebilde komplett an allen Stellen und vorzugsweise im Wesentlichen gleichmäßig durchdringen. Es ist jedoch auch möglich, dass das Flächengebilde teilweise von der Matrix durchdrungen ist. Indem das textile Flächengebilde teilweise oder überall im gesamten Bereich durchdrungen ist, werden gezielt entsprechende mechanische Eigenschaften des späteren imprägnierten textilen Flächengebildes, welches auch als Prepreg bezeichnet wird, erzeugt. Je nach Anwendungsfall kann die Matrix das textile Flächengebilde einseitig durchdringen. Darunter ist zu verstehen, dass es auf einer Seite des textilen Flächengebildes aufgebracht worden ist und innerhalb der Imprägnieranlage von einer Seite her das textile Flächengebilde durchdringt. Vorzugsweise ist es auch möglich, dass die Matrix auf beide Seiten des textilen Flächengebildes aufgebracht wird und ein Imprägnieren desselben dann von beiden Seiten erfolgt.

Gemäß der Erfindung weist die Imprägnieranlage ein erstes und ein zweites Endlosband auf, welches jeweils als Bandschlaufe ausgebildet ist. Innerhalb jeder Bandschlaufe sind Walzen angeordnet, über welche das Endlosband läuft und sozusagen die innerhalb der Bandschlaufe befindlichen Walzen umschließt. Die zwei Bandschlaufen, welche einander zugewandte Flächen haben und innerhalb Walzen umschließen, führen zwischen den zueinander zugewandten Oberflächen das textile Flächengebilde, wobei während des Durchlaufens des textilen Flächengebildes an der Kontaktstelle zwischen den beiden Bandschlaufen das textile Flächengebilde imprägnierbar ist. Die Bandschlaufen weisen Umlenkwalzen an ihren jeweiligen Umlenkbereichen auf, welche senkrecht zu der und in Richtung der einander zugewandten Oberflächen der Bandschlaufen verstellbar sind, wobei ein Umschlingungwinkel der Endlosbänder an zumindest einer weiteren innerhalb zumindest einer der Bandschlaufen angeordneten Walze regelbar ist. Dabei handelt es sich um eine Verstellung in y-Richtung. Indem die Umlenkwalzen in y-Richtung versetzbar sind, wird ein über die entsprechende, durch den Kontakt der Bandschlaufen bestimmte Druckfläche Druck, ein Anpressdruck des textilen Flächengebildes auf die Matrix, d. h. die fließfähige Materialschicht, über eine Zugkraft in den Endlosbändern ausgeübt, so dass diese die poröse Materialschicht in Form des textilen Flächengebildes imprägniert, d. h. durchdringt. Zumindest je eine der weiteren Walzen ist also in Richtung der einander zugewandten Oberflächen der Bandschlaufen verstellbar, wobei die Umlenkwalzen und die zumindest eine weitere Walze unabhängig voneinander verstellbar sind.

Eine Verstellung der Umlenkwalzen in y-Richtung führt dazu, dass die zugewandten Bandschlaufen an ihrer Berührungsstelle einen unterschiedlichen Druck entwickeln können, mit welchem die Matrix in das textile Flächengebilde hineingedrückt und dieses somit imprägniert werden kann.

Vorzugsweise ist es auch möglich, dass die Umlenkwalzen auch in x-Richtung verschiebbar bzw. verstellbar sind, so dass die Endlosbänder der jeweiligen Bandschlaufe mehr oder weniger stark gespannt werden können, wodurch auch die Druckverhältnisse des zu imprägnierenden textilen Flächengebildes beim Durchlaufen zwischen den Berührungsstellen der beiden einander zugewandten Bandschlaufen einstellbar sind.

Erfindungsgemäß ist die zumindest eine weitere Walze innerhalb zumindest einer der beiden Bandschlaufen angeordnet, welche in Richtung der einander zugewandten Oberflächen der beiden gegenüberliegenden Bandschlaufen verstellbar ist. Die weitere Walze ist also in y-Richtung verstellbar. Dabei kann diese weitere Walze allein verstellbar sein. Es ist jedoch auch möglich, dass sowohl die weitere Walze als auch die Umlenkwalzen unabhängig voneinander in y-Richtung verschiebbar und soweit einstellbar sind, dass die Walzen bzgl. ihrer Rotationsachsen entweder in einer Ebene liegen oder so weit auseinander liegen, dass die Walzen aufgrund ihres sozusagen Eintauchens zwischen die Walzen der gegenüberliegenden Bandschlaufe nicht mehr unmittelbar in Kontakt mit der anderen Seite der Bandschlaufe liegt. Nicht mehr in Kontakt mit der anderen Seite der Bandschlaufe bedeutet, dass der außen laufende Teil des Endlosbandes, welcher zurückgeführt wird, am Eintritt der Imprägnieranlage erneut mit dem zu imprägnierenden Flächengebilde in Kontakt gelangt. Während des Zurücklaufens des Endlosbandes an der Außenseite der Bandschlaufe, erfährt dieser Außenbereich trotz der Biegeschlaffheit des Endlosbandes der jeweiligen Bandschlaufe keine Auslenkung. Die Biegeschlaffheit hat den Vorteil, dass das als umlaufendes Warentransportsystem ausgebildete Walzensystem eine Einstellung der Zustellung der Walzen zueinander und damit der Umschlingungslänge des biegeschlaffen Endlosbandes der jeweiligen Bandschlaufe um eine jeweilige Walze ermöglicht. Dieses Warentransportsystem besteht also aus mindestens zwei Bandschlaufen in der Art von Förderbändern, zwischen welchen ein zu imprägnierendes Materialsystem transportiert und bearbeitet wird. Die Temperaturumgebung für das zu imprägnierende textile Flächengebilde kann in einem Bereich zwischen Raumtemperatur bzw. Umgebungstemperatur und 300°C eingestellt werden.

Zwischen den zwei Bandschlaufen wird das zu imprägnierende Materialsystem mitgeführt. Das Materialsystem weist mehrere Schichten unterschiedlichen Materials auf, von denen mindestens eine Schicht aus einem porösen Material B, dem eigentlichen textilen Flächengebilde, sowie mindestens einer Schicht aus einem Material A besteht, der Matrix, welche in der angegebenen Temperaturumgebung einen fließfähigen Zustand besitzt, wobei die dynamische Viskosität zwischen 10 und 1000 Pa*s, vorzugsweise 50 und 500 Pa*s, liegt. Das Material A besteht vorzugsweise aus thermoplastischen Kunststoffen, insbesondere Polyolefinen oder Polyamiden, welche in der angegebenen Temperaturumgebung einen schmelzflüssigen Aggregatzustand aufweisen und ein viskoelastisches Materialverhalten besitzen.

Zusammenfassend ist also festzustellen, dass durch eine gezielte Zustellung der Walzen in y-Richtung zueinander ein definierter Umschlingungswinkel des zu imprägnierenden textilen Flächengebildes um die Walzen einstellbar ist. Vorzugsweise durch die Zustellung einer Walze, insbesondere der Umlenkwalze, in x-Richtung kann die Zugkraft im Endlosband in der jeweiligen Bandschlaufe gezielt eingestellt werden. Die erfindungsgemäße Imprägnieranlage, die auch ein Warentransportsystem darstellt, weist den für die Qualität und Zuverlässigkeit und Isotropie der Eigenschaften des mit Matrix getränkten textilen Flächengebildes in Form eines Prepregs den Vorteil auf, dass das zu imprägnierende Materialsystem nicht nur kontinuierlich an den Umlenkwalzen einer Druckbeaufschlagung ausgesetzt wird, sondern diese Druckbeaufschlagung erfolgt stets senkrecht zur Walzenoberfläche in Dickenrichtung des Materialsystems, welches imprägniert wird. Diese Druckbeaufschlagung wirkt über einen definierten Zeitraum, welcher sich aus der Transportgeschwindigkeit des zu imprägnierenden textilen Flächengebildes und dem Umfangsbogen ergibt, welcher durch den Umschlingungswinkel definiert ist, welchen das zu imprägnierende textile Flächengebilde durchfährt. Durch die gleichmäßige Druckbeaufschlagung in der Imprägnieranlage wird dieser Druck auf das vorzugsweise schichtweise aufgebaute Materialsystem übertragen. Diese Druckübertragung in der gleichmäßigen Art, wie es durch die Erfindung gewährleistet ist, führt dazu, dass die fließfähige Materialschicht A die poröse Materialschicht B in Form des textilen Flächengebildes aufgrund des wirkenden gleichmäßigen Druckes in Dickenrichtung gleichmäßig imprägniert.

Ein weiterer Vorteil der Erfindung besteht darin, dass aufgrund der Zustellung der Walzen in y-Richtung ein Umschlingungswinkel individuell eingestellt werden kann. Der in Dickenrichtung wirkende Druck baut sich dabei entlang der Bandschlaufe in Transportrichtung auf. Dadurch kann Luft in der porösen Schicht entgegen der Transportrichtung entweichen.

Vorzugsweise weist zumindest eine der beiden Bandschlaufen mehrere weitere Walzen auf, welche zwischen den Umlenkwalzen angeordnet sind und zumindest mit einer Richtungskomponente bzgl. der y-Richtung senkrecht zu den einander zugewandten Oberflächen der beiden Bandschlaufen in den Bandschlaufenbereich der anderen Bandschlaufe eintauchbar verstellbar ist. Relativ große Abstände von Walzen innerhalb des oberen Bandschlaufensystems ermöglichen dort ein relativ tiefes Eintauchen von weiteren Walzen des unteren Bandschlaufensystems.

Weiter vorzugsweise sind die verstellbaren Umlenkwalzen unabhängig voneinander verstellbar. Damit kann an beliebigen Orten und zu beliebigen Zeiten der Umschlingungswinkel und damit der auf das zu imprägnierende textile Flächengebilde ausgeübte Druck variiert werden. Es ist dadurch auch möglich, dass längs der Förderrichtung des textilen Flächengebildes durch die Imprägnieranlage der Druck und damit die Durchdringungstiefe der Matrix innerhalb des textilen Flächengebildes anwendungsspezifisch variiert werden kann.

Vorzugsweise ist die Verstellung der zumindest einen weiteren Walze in y-Richtung beim Eintauchen in die andere Bandschlaufe bzgl. ihrer Eintauchtiefe so regelbar, dass das textile Flächengebilde einen veränderlichen Umschlingungswinkel um die weitere Walze aufweist. Durch Verstellung der Umlenkwalzen ebenfalls in y-Richtung, d. h. in Richtung der einander zugewandten Oberflächen der Endlosbänder, ist somit der Anpressdruck des textilen Flächengebildes an der weiteren Walze auf das textile Flächengebilde regelbar. Die Regelbarkeit des Anpressdruckes hat den Vorteil, dass für unterschiedliche Materialien, für unterschiedliche textile Flächengebilde und natürlich auch für unterschiedliche Matrixmaterialien der für die Imprägnierung bzw. Durchimprägnierung des textilen Flächengebildes erforderliche oder optimale Anpressdruck im Sinne des Erreichens vorgegebener Imprägnierungsgrade regelbar ist.

Gemäß einer weiteren bevorzugten Ausführungsform sind die weiteren Walzen an ihrer Außenkontur längs ihrer Drehachse ballenförmig oder konkav gekrümmt. Die Abweichung von einer zylindrischen Form der Walzen kann aus technologischen oder physikalischen Gegebenheiten der textilen Flächengebilde im Zusammenhang mit der gewünschten Imprägnierungstiefe vorteilhaft sein.

Zusätzlich zu einer entsprechenden Gestaltung der äußeren Form, gegebenenfalls abweichend von einer zylindrischen Form, kann vorgesehen sein, dass die weitere Walze bzw. die weiteren Walzen in ihrer Längsrichtung bewegbar, insbesondere vibrierbar sind. Die zusätzliche Bewegungskomponente der weiteren Walzen in ihrer Längsrichtung kann dazu beitragen, dass eine bessere Imprägnierung, d. h. Durchdringung, des textilen Flächengebildes erreicht wird. Das textile Flächengebilde stellt ein poröses Material dar, welches beim Imprägnieren von der Matrix durchdrungen wird, indem die Zwischenräume zwischen den einzelnen Fasern durch die Matrix aufgefüllt werden. Durch eine Vibration der weiteren Walze kann das Durchdringen des textilen Flächengebildes mit der Matrix verbessert werden, so dass ein sehr hoher Imprägnierungsgrad erreicht werden kann.

Um die Fließfähigkeit der Matrix für das Imprägnieren des textilen Flächengebildes zu erhöhen, kann gemäß einem weiteren Ausführungsbeispiel vorgesehen sein, dass zumindest eine weitere Walze wie auch sämtliche weiteren Walzen temperierbar sind, so dass über die Erhöhung der Temperatur der Matrix deren Viskosität erniedrigt werden kann, um die Fließeigenschaften im porösen textilen Flächengebilde im Sinne eines Durchdringens zu verbessern.

Damit das textile Flächengebilde während des Imprägnierens mit der Matrix schonend behandelt wird, d. h. schonend durch die Imprägnieranlage mittels der Endlosbänder gefördert und dabei imprägniert wird, sind die Endlosbänder vorzugsweise temperaturstabil, reibungsarm und antihaftbeschichtet ausgebildet. Insbesondere die Antihaftbeschichtung gewährleistet, dass das in der Imprägnieranlage imprägnierte textile Flächengebilde an den Endlosbändern beim Verlassen der Imprägnieranlage nicht haftet und daher leicht abgeführt, und als Prepreg entsprechend bis zur Endanwendung gelagert werden kann.

Das textile Flächengebilde ist eine Fasern aufweisende unidirektionale Lage oder ein Multiaxialgelege. Es ist jedoch auch möglich, dass das textile Flächengebilde ein Vlies ist oder ein Gewebe.

Vorzugsweise ist die Matrix eine Polymermatrix und weiter vorzugsweise eine thermoplastische Matrix. Der Vorteil der Verwendung einer thermoplastischen Matrix besteht darin, dass durch Temperaturerhöhung die Viskosität des Matrixmaterials herabgesetzt werden kann, so dass eine entsprechend der Viskosität des Thermoplastmaterials gewünschte Viskosität über eine Temperaturregelung einstellbar ist. Damit kann für unterschiedliche Materialien und unterschiedliche Fertigungsbedingungen die Durchdringung der Matrix in das textile Flächengebilde gesteuert werden. Vorzugsweise ist das Ausgangsmaterial der thermoplastischen Matrix, welches der Imprägnieranlage zugeführt wird, ein biegeschlaffes Flächengebilde in Form einer Folie oder eines Vlieses.

Gemäß einem zweiten Aspekt der Erfindung wird ein Verfahren zum Imprägnieren eines textilen Flächengebildes für Kompositbauteile bereitgestellt, welches mit einer Matrix bzw. einem Matrixmaterial getränkt wird. Durch das Tränken des textilen Flächengebildes mit einem Matrixmaterial wird das textile Flächengebilde imprägniert und bildet ein sogenanntes Prepreg. Das ist insbesondere von Bedeutung für thermoplastische Matrixmaterialien in der Hinsicht, dass die Prepregs relativ steif sind und gut transportierbar sind, für eine praktische Anwendung aber häufig einen entsprechenden Grad an Flexibilität und Drapierfähigkeit aufweisen müssen, was erreicht werden kann, indem das Thermoplastmaterial und damit das mit dem Thermoplastmaterial imprägnierte bzw. getränkte textile Flächengebilde erwärmt wird, wodurch das Prepreg in eine gewünschte Form bei dreidimensionalen Anwendungen gebracht werden kann. Zum Imprägnieren wird das textile Flächengebilde zwischen zwei jeweils aus einem Endlosband gebildeten, über Umlenkwalzen laufende Bandschlaufen geführt. Der Anpressdruck, mit welchem die Umlenkwalzen, nachdem das textile Flächengebilde mit dem Thermoplastmaterial zusammengebracht wird, wird über die Spannung der Endlosbänder und durch Verstellung der Walzen in Richtung der einander zugewandten Oberflächen der Bandschlaufen und senkrecht dazu (d. h. in y-Richtung) und weitere Walzen in Richtung der einander zugewandten Oberflächen der Bandschlaufen sowie durch Variation des Umschlingungswinkels der Endlosbänder an den Walzen geregelt, wobei die Umlenkwalzen und die zumindest eine weitere Walze unabhängig voneinander verstellt werden. Dabei werden die Walzen in y-Richtung verschoben, was vor allen Dingen auch dann so durchgeführt wird, wenn das textile Flächengebilde zumindest teilweise mit der Matrix, insbesondere beidseitig, durchtränkt wird, so dass das textile Flächengebilde vollständig durchimprägniert ist, wenn in den Bandschlaufen die innenliegenden weiteren Walzen vorgesehen sind, welche durch ihre Verlagerung in y-Richtung in die gegenüberliegende Bandschlaufe eintauchen. Bei einem höheren Grad der Umschlingung der jeweiligen Walze mit dem Endlosband wird der Druck größer, welcher auf das textile Flächengebilde zusammen mit dem zum Imprägnieren verwendeten Matrixmaterial beim Durchlaufen der Imprägnieranlage wirkt.

Vorzugsweise wird das textile Flächengebilde vollständig durchimprägniert.

Das textile Flächengebilde ist vorzugsweise eine unidirektionale Lage oder ein Multiaxialgelege, welche bzw. welches mit einer Matrix, insbesondere einer thermoplastischen Matrix, imprägniert wird.

Vorzugsweise ist für die Imprägnieranlage bzw. ein Imprägniermodul ein nachgeschaltetes Messsystem vorgesehen, mittels welchem eine kontinuierliche und zerstörungsfreie Messung der Breite und der Dicke des die Imprägnieranlage verlassenden Materials erfolgt. Dabei wird die Dicke des Materials über seine gesamte Breite gemessen. Die mittlere Dicke wird bei der ebenfalls gemessenen Breite mit einem Referenzwert, der Kompaktierungsdicke, verglichen. Die Kompaktierungsdicke ergibt sich aus den gegebenen Eingangsgrößen der verwendeten Materialien wie beispielsweise Flächengewicht, Dicke, Dichte, tex-Zahl und stellt einen theoretisch erreichbaren Kennwert dar. Die Abweichung der gemessenen mittleren Dicke von der theoretischen Kompaktierungsdicke in Prozent ergibt den Porenanteil und damit den Imprägniergrad.

Weitere Vorteile, Anwendungsmöglichkeiten und Details der erfindungsgemäßen Imprägnieranlage werden nun anhand der nachfolgenden Zeichnung detailliert erläutert. In der Zeichnung zeigen:
- Figur 1: eine Imprägnieranlage bzw. ein Imprägniermodul mit zwei einander zugeordneten Bandschlaufen mit jeweiligen Umlenkwalzen und weiteren Walzen;
- Figur 2: eine weitere Walze innerhalb einer Bandschlaufe mit Darstellung des Umschlingungswinkels durch das textile Flächengebilde; und
- Figur 3: eine aus verschiedenen Modulen aufgebaute Anlage zur Herstellung imprägnierter unidirektionaler einlagiger Tapes und mehrlagiger Verbundhalbzeuge mit multiaxialer Verstärkungsausrichtung mit Imprägniermodul.

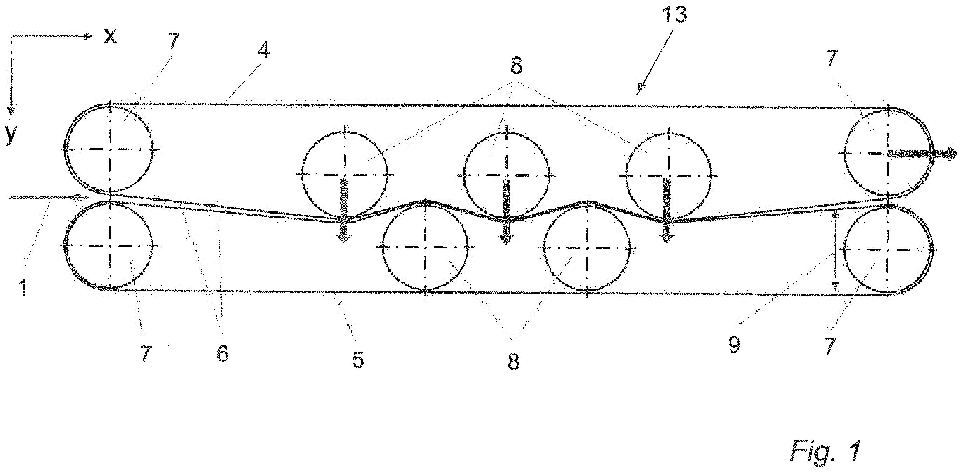

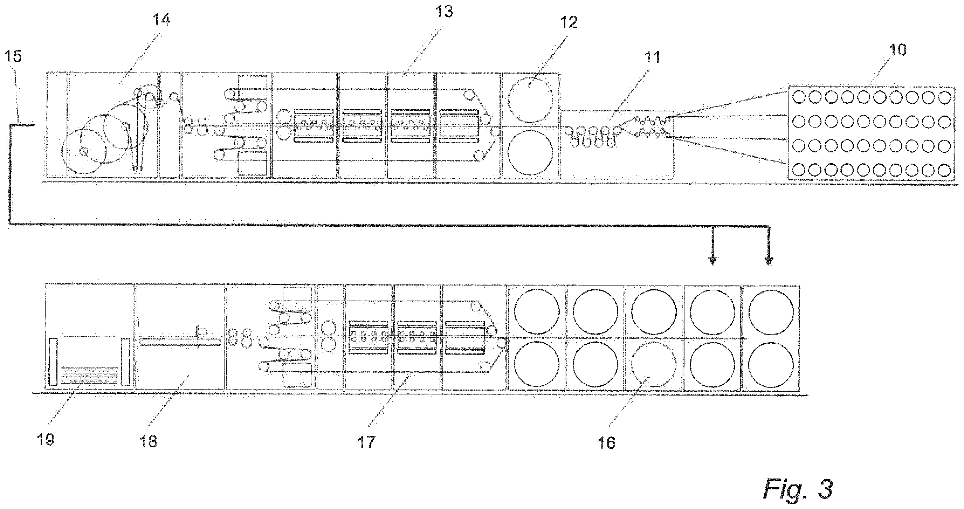

Figur 1 zeigt eine Imprägnieranlage bzw. ein Imprägniermodul 13 (s. Figur 3), welches zwei einander zugeordnete Bandschlaufen 4, 5 aufweist. Die erste 4 und die zweite Bandschlaufe 5 werden durch jeweilige Endlosbänder gebildet, welche an ihren Umlenkbereichen Umlenkwalzen 7 aufweisen und zusätzlich zwischen den jeweiligen Umlenkwalzen 7 mehrere weitere Walzen 8 angeordnet haben.

Die Umlenkwalzen, über welche die jeweiligen Endlosbänder geführt sind, spannen zwischen der Oberseite und der Unterseite einen Bandschlaufenbereich 9 auf. Die in Figur 1 oben dargestellte erste Bandschlaufe 4 hat zwischen den beiden Umlenkwalzen 7 drei weitere Walzen 8 angeordnet und bildet eine Oberfläche 6, welche der in Figur 1 unten dargestellten zweiten Bandschlaufe 5 zugeordnet ist. D. h., die untere Seite der Bandschlaufe 4 und die obere Seite der Bandschlaufe 5 sind einander zugeneigt. Zwischen den einander zugeneigten Oberflächen 6 wird das textile Flächengebilde 1 hindurchgeführt und einem entsprechendem Druck ausgesetzt, welcher gewährleisten soll, dass das textile Flächengebilde, welches aus einem reinen textilen Flächengebilde 3 und einer Matrix 2 in Form beispielsweise einer Folie oder eines Vlieses besteht. Die Umlenkwalzen 7 sind in x-Richtung, was durch den waagerechten dicken Pfeil an der oberen rechten Umlenkwalze 7 gekennzeichnet ist, verstellbar. Dadurch kann die Spannung des Endlosbandes innerhalb der ersten Bandschlaufe 4 verändert werden. Innerhalb der Bandschlaufe 4 sind drei weitere Walzen 8 angeordnet, welche zueinander einen Abstand aufweisen, welcher groß genug ist, dass die Walzen 8 in der Bandschlaufe 4 in den Bandschlaufenbereich 9 von weiteren Walzen 8, welche in der zweiten Bandschlaufe 5 angeordnet sind, mit einer gewissen Tiefe eintauchen können. Ebenso können die weiteren Walzen 8 der zweiten Bandschlaufe 5 in den nicht eingezeichneten Bandschlaufenbereich der ersten Bandschlaufe 4 eintauchen, und zwar ebenfalls zwischen die einen Abstand zueinander aufweisenden weiteren Walzen 8 in der zweiten Bandschlaufe 5. Durch eine Verstellung der weiteren Walzen 8 in y-Richtung wird der Umschlingungswinkel, den das textile Flächengebilde im Bereich der einander zugewandten Oberflächen 6 beim Fördern über die jeweilige weitere Walze 8 erfährt, variiert. Je tiefer die weitere Walze in den Zwischenraum zwischen den weiteren Walzen 8 der gegenüberliegenden Bandschlaufe eintaucht, umso größer ist der Umschlingungswinkel. Der Umschlingungswinkel garantiert eine im Wesentlichen gleichmäßige Druckbeaufschlagung des textilen Flächengebildes 1 zusammen mit der Matrix 2, so dass über einen Flächenbereich ein im Wesentlichen konstanter Druck auf die Matrix 2 ausgeübt werden kann, welche dadurch gleichmäßig in das eigentliche textile Flächengebilde 3 eindringt und dort eine entsprechend gleichmäßige Verteilung bewirkt.

Wenn die weiteren Walzen 8 in y-Richtung versetzt werden, so bewirkt dies eine Verkürzung der Länge der Bandschlaufe, was durch eine entsprechende Einstellung bzw. Justierung der Umlenkwalzen 7 in x-Richtung kompensiert wird. Es ist jedoch auch denkbar, bei einer Verstellung der weiteren Walzen 8 in y-Richtung zum jeweiligen Eintauchen in den Bandschlaufenbereich 9 der jeweils anderen Bandschlaufe 4 bzw. 5 die Umlenkwalzen 7 nicht in x-Richtung zu verstellen, so dass sich dadurch die Bandspannung in der jeweiligen Bandschlaufe erhöht, wodurch durch die weitere Walze 8 der auf das textile Flächengebilde 1 zusammen mit der Matrix 2 im Bereich des Umschlingungswinkels sich ausbildende Druck erhöht werden kann.

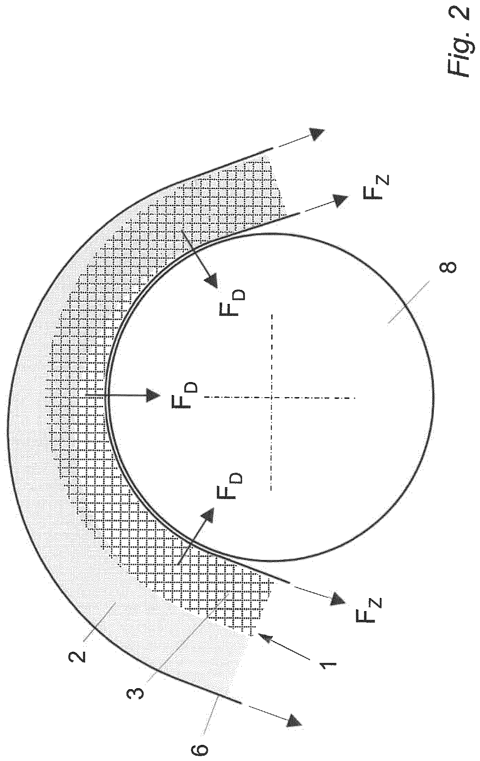

In Figur 2 ist gezeigt, wie das aus einer Materialschicht A, der Matrix, und der Materialschicht B, der textilen Schicht, bestehende textile Flächengebilde durch den Umschlingungswinkel sich an die weitere Walze 8 anlegt, wodurch im Bereich des Umschlingungswinkels eine Druckkraft F_{D} auf das textile Flächengebilde 1 ausgeübt wird. Gleichzeitig wird entsprechend der Einstellung der Umlenkwalzen 7 in x-Richtung eine entsprechende Bandspannung erzeugt, welche in Figur 2 durch die Zugkraft Fz in Richtung des textilen Flächengebildes 1 dargestellt ist. Dadurch wird die entsprechende Druckbeaufschlagung beim Durchlaufen des Imprägniermoduls auf das schichtweise aufgebaute Materialsystem, nämlich das textile Flächengebilde 1, übertragen, was dazu führt, dass die fließfähige Materialschicht der Matrix 2 die poröse Materialschicht der textilen Schicht 3 aufgrund des wirkenden Druckes in Dickenrichtung imprägniert. Der Druck baut sich dabei entlang des textilen Flächengebildes 1 in Förderrichtung auf. Dadurch wird ein Entweichen der Luft aus der porösen Schicht entgegen der Förderrichtung ermöglicht.

Das in den Figuren 1 und 2 prinzipiell dargestellte Imprägniermodul hat den Vorteil, dass über den einstellbaren Umschlingungswinkel die ausgeübte Druckkraft und damit die jeweilige Länge von einer jeweiligen weiteren Walze 8 auf das textile Flächengebilde 1 zum Penetrieren der Matrix 2 in die poröse textile Materialschicht 3, d. h. das textile Flächengebilde 1, einstellbar ist. Dazu sind die Umlenkwalzen 7 und zweckmäßigerweise auch die weiteren Walzen 8 innerhalb der jeweiligen Bandschlaufe 4, 5 in y-Richtung variierbar. Die Umlenkwalzen 7 sind dabei zumindest in x-Richtung einstellbar, um eine Längenverkürzung durch Verstellung der weiteren Walzen 8 in y-Richtung für die jeweilige Bandschlaufe 4, 5 zu kompensieren. Sind bei dem dargestellten Imprägniersystem gemäß Figur 1 die Umlenkwalzen 7 untereinander angeordnet, so entfällt bei einer derartigen Anordnung die Verstellung in y-Richtung, da der linienförmig in das textile Flächengebilde eingebrachte Druck gerade vermieden werden soll. Es ist jedoch auch möglich, dass die erste Bandschlaufe 4 und die zweite Bandschlaufe 5 eine unterschiedliche Länge aufweisen. In einem solchen Fall können natürlich die Umlenkwalzen 7 der einen Bandschlaufe 4 bzw. 5 in den Bandschlaufenbereich 9 der anderen Bandschlaufe 4 bzw. 5 eintauchen. Damit können die Umlenkwalzen 7 quasi die Funktion der innerhalb einer jeweiligen Bandschlaufe angeordneten weiteren Walzen 8 übernehmen.

In Figur 3 ist dargestellt, wie eine Imprägnieranlage als Imprägniermodul 13 in einer kompletten Anlage im Sinne einer zweistufigen Verarbeitungstechnologie zur Herstellung imprägnierter unidirektionaler einlagiger Tapes und mehrlagiger Verbundhalbzeuge mit multiaxialer Verstärkungsausrichtung eingeordnet ist. Der Grundaufbau einer derartigen Gesamtanlage weist ein Spulengatter 10 auf, von welchem eine entsprechende Anzahl von Fäden abgezogen wird, welche in einer dem Spulengatter 10 nachgeschalteten Einheit, einem Spreizmodul 11, so zusammengefasst werden, dass ein möglichst breites Spreizen zur Erzielung eines möglichst niedrigen Flächengewichtes realisiert wird. Dem Spreizmodul 11 schließt sich eine Abwicklungseinheit 12 an, welche vorzugsweise als Folie oder Vlies die Matrix 2 aufgewickelt hat, so dass durch Abwicklung der Matrix 2 ein Flächengebilde 1 entsteht, welches eine eigentliche textile Schicht 3 und eine Matrixschicht 2 aufweist, welche beim Durchlaufen der Anlage vereinigt werden dergestalt, dass die Matrix 2 die poröse textile Schicht 3 penetriert. Die Anlage kann dabei so eingestellt werden, dass ein vollständiges Penetrieren des Matrixmaterials in die poröse textile Schicht realisiert wird. Es ist jedoch auch möglich, dass die Matrix 2 von beiden Seiten der textilen Schicht 3 in das textile Flächengebilde hineinpenetriert. Des Weiteren ist es möglich, dass die Matrix 2 die textile Schicht vollständig durchdringt.

Der Abwicklungseinheit 12 für die Matrix 2 schließt sich die Imprägnieranlage 13, d. h. das Imprägniermodul an, welches auch als Konsolidiermodul bezeichnet wird. Der Grundaufbau dieses Imprägniermoduls ist der, welcher bzgl. der Figuren 1 und 2 bereits beschrieben worden ist. Nach der Imprägnieranlage wird in dem nachgeschalteten Wendewickler 14 ein Aufwickeln unter gleichzeitigen Wenden des imprägnierten textilen Flächengebildes vorgenommen. Bei dem Ausführungsbeispiel gemäß Figur 3 ist das textile Flächengebilde 1 nach seiner Imprägnierung ein imprägniertes UD-Tape 15, welches in einer Tape-Abwicklungseinheit 16 abgewickelt und einem Laminiermodul 17 zugeführt wird. Ein Laminiermodul wird immer dann eingesetzt, wenn dem imprägnierten textilen Flächengebilde noch weitere Schichten zulaminiert werden sollen, was bei Kompositbauelementen, welche eine vorgegebene Eigenschaft erreichen sollen, vorgenommen wird. In einem dem Laminiermodul 17 nachgeschalteten Querschneidmodul 18 wird das imprägnierte und laminierte textile Flächengebilde in Längenstücke geschnitten, welche auf einer Palette im Sinne einer Palettierung 19 abgelegt werden. Die auf diese Art und Weise hergestellten Halbfertigprodukte können zum weiteren Einsatz aufgrund der Verwendung von Thermoplasten für das Matrixmaterial durch Erwärmen in entsprechende Formen gebracht werden, was am Einsatzort geschieht, ohne dass eine Matrix 2 unter schwierigen Einsatzbedingungen dann noch zugeführt werden muss.

### Bezugszeichenliste:

- 1: textiles Flächengebilde
- 2: Materialschicht A / Matrix
- 3: Materialschicht B / textile Schicht / eigentliches textiles Flächengebilde
- 4: erste Bandschlaufe / Endlosband
- 5: zweite Bandschlaufe / Endlosband
- 6: einander zugewandte Oberflächen
- 7: Umlenkwalze
- 8: weitere Walze
- 9: Bandschlaufenbereich
- 10: Spulengatter
- 11: Spreizmodul
- 12: Abwicklung Matrix (Folie, Vlies)
- 13: Imprägniermodul / Konsolidiermodul
- 14: Wendewickler
- 15: UD-Tape
- 16: Tape-Abwicklung
- 17: Laminiermodul
- 18: Querschneidmodul
- 19: Palettierung

## Patentansprüche

1. Imprägnieranlage zum Imprägnieren eines textilen Flächengebildes (1) für Kompositbauteile, mittels welcher eine Matrix (2) so auf das textile Flächengebilde (1) in Form einer Fasern aufweisenden unidirektionalen Lage, eines Multiaxialgeleges, eines Vlieses oder eines Gewebes aufbringbar ist, dass dieses zumindest teilweise und/oder zumindest einseitig von der Matrix (2) durchdrungen ist, **dadurch gekennzeichnet, dass** ein erstes und ein zweites als Bandschlaufe (4, 5) ausgebildetes Endlosband vorgesehen ist, zwischen denen an ihren einander zugewandten Oberflächen (6) das textile Flächengebilde (1) geführt und imprägnierbar ist und welche an ihren jeweiligen Umlenkbereichen Umlenkwalzen (7) aufweisen, mittels welcher ein Anpressdruck des textilen Flächengebildes mit der Matrix als Thermoplastmaterial über eine Zugkraft in den Endlosbändern durch Verstellung der Umlenkwalzen (7) senkrecht zu der in die Richtung der aufeinander zugewandten Oberflächen (6) weisenden Richtung und durch ihre Verstellung in Richtung der einander zugewandten Oberflächen (6) der Bandschlaufen (4, 5) sowie durch Variation eines Umschlingungswinkels der Endlosbänder zumindest einer weiteren innerhalb zumindest einer der Bandschlaufen (4, 5) angeordneten Walze (8) regelbar ist, von denen zumindest je eine Walze in Richtung der einander zugewandten Oberflächen (6) der Bandschlaufen verstellbar sind, und wobei die Umlenkwalzen (7) und die zumindest eine weitere Walze (8) unabhängig voneinander verstellbar sind.

2. Imprägnieranlage nach Anspruch 1, **dadurch gekennzeichnet, dass** zumindest eine der Bandschlaufen (4, 5) mehrere weitere Walzen (8) aufweist, welche zwischen den Umlenkwalzen (7) angeordnet sind und zumindest mit einer Richtungskomponente senkrecht zu den zugewandten Oberflächen (6) in den Bandschlaufenbereich (9) der anderen Bandschlaufe eintauchbar verstellbar sind.

3. Imprägnieranlage nach Anspruch 1 oder 2, **dadurch gekennzeichnet, dass** die verstellbaren Umlenkwalzen (7) unabhängig voneinander verstellbar sind.

4. Imprägnieranlage nach einem der Ansprüche 1 bis 3, **dadurch gekennzeichnet, dass** das textile Flächengebilde (1) an der zumindest einen weiteren Walze (8) beim Eintauchen in die andere Bandschlaufe (4 bzw. 5) einen je nach Eintauchtiefe veränderlichen Umschlingungswinkel aufweist, wobei durch Verstellung der Umlenkwalzen (7) in Richtung der einander zugewandten Oberflächen (6) die Endlosbänder bzgl. ihres Anpressdruckes an der weiteren Walze (8) auf das textile Flächengebilde (1) regelbar ist.

5. Imprägnieranlage nach einem der Ansprüche 1 bis 4, **dadurch gekennzeichnet, dass** zumindest die weiteren Walzen (8) ballenförmig oder konkav gekrümmt sind.

6. Imprägnieranlage nach einem der Ansprüche 1 bis 5, **dadurch gekennzeichnet, dass** die zumindest eine weitere Walze (8) in ihrer Längsrichtung bewegbar, insbesondere vibrierbar, ist.

7. Imprägnieranlage nach einem der Ansprüche 1 bis 6, **dadurch gekennzeichnet, dass** die zumindest eine weitere Walze (8) temperierbar ist.

8. Imprägnieranlage nach einem der Ansprüche 1 bis 7, **dadurch gekennzeichnet, dass** die Endlosbänder temperaturstabil, reibungsarm und antihaftbeschichtet ausgebildet sind.

9. Verfahren zum Imprägnieren eines textilen Flächengebildes (1) für Kompositbauteile, welches mit einer Matrix (2) getränkt wird, indem das textile Flächengebilde (1) zwischen zwei jeweils aus einem Endlosband gebildeten, über Umlenkwalzen (7) laufenden Bandschlaufen (4, 5) geführt ist, deren Anpressdruck auf das mit der Matrix (2) getränkte textile Flächengebilde (1) über die Regelung der Spannung der Endlosbänder und durch Verstellung der Umlenkwalzen (7) in Richtung der einanderzugewandten Oberflächen (6) der Bandschlaufen (4, 5) und senkrecht dazu und weiterer Walzen (8) in Richtung der einander zugewandten Oberflächen (6) der Bandschlaufen (4, 5) sowie durch Variation des Umschlingungswinkels der Endlosbänder an den weiteren Walzen (8) geregelt wird, wobei dazu die Umlenkwalzen (7) und die zumindest eine weitere Walze (8) unabhängig voneinander verstellt werden..

10. Verfahren nach Anspruch 9, bei welchem der Anpressdruck so eingestellt wird, dass das textile Flächengebilde (1) zumindest teilweise mit der Matrix (2), insbesondere beidseitig, durchtränkt wird.

11. Verfahren nach Anspruch 10, bei welchem das textile Flächengebilde (1) vollständig durchimprägniert wird.

12. Verfahren nach einem der Ansprüche 9 bis 11, bei welchem das textile Flächengebilde (1) eine unidirektionale Lage oder ein Multiaxialgelege ist, welche bzw. welches mit einer Matrix (2), insbesondere einer thermoplastischen Matrix, imprägniert wird.

## Claims

1. Impregnation installation for impregnating a textile sheetlike structure (1) for composite components, by means of which a matrix (2) can be applied in the form of a unidirectional ply comprising fibres, of a multiaxial laid scrim, of a nonwoven or of a woven fabric to the textile sheetlike structure (1) in such a way that the latter is penetrated at least partially and/or at least on one side by the matrix (2), **characterized in that** a first and a second endless belt in the form of belt loops (4, 5) are provided, between which, on the mutually facing surfaces (6) thereof, the textile sheetlike structure (1) is guided and can be impregnated and which have, in the respective deflection regions thereof, deflection rollers (7) by means of which a contact pressure between the textile sheetlike structure and the matrix in the form of thermoplastic material can be regulated via a tensile force in the endless belts by adjustment of the deflection rollers (7) perpendicularly with respect to the direction pointing in the direction of the mutually facing surfaces (6) and by adjustment thereof in the direction of the mutually facing surfaces (6) of the belt loops (4, 5), and by variation of a wrap angle of the endless belts of at least one further roller (8) arranged within at least one of the belt loops (4, 5), of which at least one roller can be adjusted in the direction of the mutually facing surfaces (6) of the belt loops, and wherein the deflection rollers (7) and the at least one further roller (8) can be adjusted independently of one another.

2. Impregnation installation according to Claim 1, **characterized in that** at least one of the belt loops (4, 5) has a plurality of further rollers (8) which are arranged between the deflection rollers (7) and which can be adjusted at least with a directional component perpendicular to the facing surfaces (6) so as to be able to dip into the belt loop region (9) of the other belt loop.

3. Impregnation installation according to Claim 1 or 2, **characterized in that** the adjustable deflection rollers (7) can be adjusted independently of one another.

4. Impregnation installation according to one of Claims 1 to 3, **characterized in that** the textile sheetlike structure (1) has, at the at least one further roller (8), when dipping into the other belt loop (4 or 5), a wrap angle which is variable depending on the dipping depth, wherein the endless belts can be regulated with regard to the contact pressure thereof on the textile sheetlike structure (1) at the further roller (8) by adjustment of the deflection rollers (7) in the direction of the mutually facing surfaces (6).

5. Impregnation installation according to one of Claims 1 to 4, **characterized in that** at least the further rollers (8) are curved in a ball-shaped or concave manner.

6. Impregnation installation according to one of Claims 1 to 5, **characterized in that** the at least one further roller (8) can be moved, in particular can be vibrated, in the longitudinal direction thereof.

7. Impregnation installation according to one of Claims 1 to 6, **characterized in that** the at least one further roller (8) can be temperature-controlled.

8. Impregnation installation according to one of Claims 1 to 7, **characterized in that** the endless belts are configured to be temperature-stable, to have little friction and to have a non-stick coating.

9. Method for impregnating a textile sheetlike structure (1) for composite components, which is saturated with a matrix (2) by guiding the textile sheetlike structure (1) between two belt loops (4, 5) which are each formed from an endless belt, which run over deflection rollers (7) and the contact pressure of which on the textile sheetlike structure (1) impregnated with the matrix (2) is regulated by regulation of the tension of the endless belts and by adjustment of the deflection rollers (7) in the direction of the mutually facing surfaces (6) of the belt loops (4, 5), and in the direction perpendicular thereto, and of further rollers (8) in the direction of the mutually facing surfaces (6) of the belt loops (4, 5), and also by variation of the wrap angle of the endless belts at the further rollers (8), wherein, in this regard, the deflection rollers (7) and the at least one further roller (8) are adjusted independently of one another.

10. Method according to Claim 9, in which the contact pressure is set such that the textile sheetlike structure (1) is at least partially saturated through with the matrix (2), in particular on both sides.

11. Method according to Claim 10, in which the textile sheetlike structure (1) is completely impregnated through.

12. Method according to one of Claims 9 to 11, in which the textile sheetlike structure (1) is a unidirectional ply or a multiaxial laid scrim which is impregnated with a matrix (2), in particular a thermoplastic matrix.

## Revendications

1. Système d'imprégnation destiné à imprégner un tissu textile (1) destiné à des éléments composites, ledit système pouvant appliquer une matrice (2) sur le tissu textile (1) se présentant sous la forme d'une couche unidirectionnelle pourvue de fibres, d'un tissu multiaxial, d'un non-tissé ou d'un tissu tissé de sorte que celui-ci soit traversé au moins partiellement et/ou sur au moins un côté par la matrice (2), **caractérisé en ce qu'**une première et une deuxième bande sans fin, conçues comme des boucles (4, 5), sont prévues entre lesquelles le tissu textile est guidé sur leurs surfaces (6) dirigées l'une vers l'autre (1) et peut être imprégné et qui comportent au niveau de leurs zones de renvoi respectives des rouleaux de renvoi (7) qui peuvent réguler une pression de contact du tissu textile pourvu de la matrice se présentant sous la forme d'une matière thermoplastique par le biais d'une force de traction exercée dans les bandes sans fin par réglage des rouleaux de renvoi (7) perpendiculairement à la direction pointant dans la direction des surfaces (6) dirigées l'une vers l'autre et par réglage de ceux-ci en direction des surfaces (6), dirigées l'une vers l'autre, des boucles de bande (4, 5) et par variation d'un angle d'enroulement des bandes sans fin d'au moins un autre rouleau (8) disposé à l'intérieur d'au moins une des boucles de bande (4, 5) dont au moins un rouleau est réglable en direction des surfaces (6), dirigées l'une vers l'autre, des boucles de bande, et les rouleaux de renvoi (7) et l'au moins un autre rouleau (8) étant réglables indépendamment les uns des autres.

2. Système d'imprégnation selon la revendication 1, **caractérisé en ce que** l'une au moins des boucles de bande (4, 5) comporte une pluralité d'autres rouleaux (8) qui sont disposés entre les rouleaux de renvoi (7) et qui peuvent être réglés au moins avec une composante directionnelle perpendiculaire aux surfaces (6) dirigées l'une vers l'autre de manière à pouvoir être plongées dans la zone de boucle (9) de l'autre boucle de bande.

3. Système d'imprégnation selon la revendication 1 ou 2, **caractérisé en ce que** les rouleaux de renvoi réglables (7) sont réglables indépendamment les uns des autres.

4. Système d'imprégnation selon l'une des revendications 1 à 3, **caractérisé en ce que** le tissu textile (1) sur l'au moins un autre rouleau (8) lorsqu'il est plongé dans l'autre boucle de bande (4 ou 5) présente un angle d'enroulement qui varie en fonction de la profondeur de plongée, le réglage des rouleaux de renvoi (7) en direction des surfaces (6) dirigées l'une vers l'autre permettant de réguler la pression de contact des bandes sans fin au niveau de l'autre rouleau (8) sur le tissu textile (1).

5. Système d'imprégnation selon l'une des revendications 1 à 4, **caractérisé en ce qu'**au moins les autres rouleaux (8) sont en forme de boule ou incurvés de manière concave.

6. Système d'imprégnation selon l'une des revendications 1 à 5, **caractérisé en ce que** l'au moins un autre rouleau (8) peut être déplacé, notamment mis en vibration, dans sa direction longitudinale.

7. Système d'imprégnation selon l'une des revendications 1 à 6, **caractérisé en ce que** l'au moins un autre rouleau (8) peut être régulé en température.

8. Système d'imprégnation selon l'une des revendications 1 à 7, **caractérisé en ce que** les bandes sans fin sont conçues pour être stables en température, à faible frottement et pourvues d'un revêtement antiadhésif.

9. Procédé d'imprégnation d'un tissu textile (1) qui est destiné à des éléments composites et qui est imbibé d'une matrice (2), procédé selon lequel le tissu textile (1) est maintenu entre deux boucles de bande (4, 5), formés respectivement d'un bande sans fin et qui passent par des rouleaux de renvoi (7), dont la pression de contact sur le tissu textile (1) imbibé de la matrice (2) est régulée par régulation de la tension des bandes sans fin et par réglage des rouleaux de renvoi (7) en direction des surfaces (6), dirigées l'une vers l'autre, des boucles de bande (4, 5) et perpendiculairement à celui-ci et à d'autres rouleaux (8) en direction des surfaces (6), dirigées l'une vers l'autre, des boucles de bande (4, 5) et par variation de l'angle d'enroulement des bandes sans fin sur les autres rouleaux (8), les rouleaux de renvoi (7) et l'au moins un autre rouleau (8) étant pour cela réglés indépendamment les uns des autres.

10. Procédé selon la revendication 9, dans lequel la pression de contact est réglée de manière à ce que le tissu textile (1) soit au moins partiellement imbibé de la matrice (2), notamment des deux côtés.

11. Procédé selon la revendication 10, dans lequel le tissu textile (1) est complètement imprégné.

12. Procédé selon l'une des revendications 9 à 11, dans lequel le tissu textile (1) est une couche unidirectionnelle ou un tissu multiaxial qui sont imprégnés avec une matrice (2), notamment une matrice thermoplastique.
